# EUROPEAN PATENT APPLICATION

(11) **EP 1 260 898 A1**
(43) Date of publication of application: **27.11.2002**
(21) Application number: 01201940.2
(22) Date of filing: 23.05.2001
(51) Int. Cl.: G06F 1/00

(54) **Method for authenticating files**

(71) Applicant: Koninklijke KPN N.V., 9726 AE Groningen (NL)
(72) Inventor: Roelofsen, Gerrit, 2331 AH Leiden (NL); Gelbord, Boaz Simon, 1016 VS Amsterdam (NL)
(74) Representative: Wuyts, Koenraad Maria

(57) **Abstract**

Method and system for marking a file (1) by introducing, by a processor (3) controlled modifications under control of a cryptographic process loaded in a cryptographic module (5). The amendments can be registered in a separate amendments file (6) or, after encryption, added to the same file (1). The amendments may be rectified by a receiving party, (9), using said process in reverse way after reading the properties of the control algorithm used to make those amendments, from a control properties file (7). The method and system can be used to identify the file's (1) identity or origin and, moreover, to distribute degraded files to users (9) free of charge and, after paying for the parameters registered in the control properties file (7), restored high-quality versions of the same file (1).

## Description

### BACKGROUND OF THE INVENTION

The invention relates to a method for marking files by introducing controlled amendments in said file. The technical field of the invention is controlled distribution of data files.

It is a general problem to distribute files which are not intended to be re-distributed free of charge. For instance this is the case with files which comprise computer software, directories, music etc. Subject of the present invention is to provide more or less hidden recognition marks within such file, which cannot (or not-feasably) or only under license conditions, be deleted from such file.

### SUMMARY OF THE INVENTION

According to the present invention said marking amendments are introduced in the (source) file under control of a (non-public) cryptographic process. The result is an output file which comprises (minor) amendments which may attract no attention but which are detectable well for sake of proving the file's origin in case of infringement of the file's copyright.

Said amendments may comprise deletions or replacements of (minor) file parts or (minor) additions to said file, at one or more places controlled by said process.

To be able to prove the file's origin a registration of said amendments may be written into a separate amendments file. The amendments file can be used to investigate a file to the presence of said characteristic amendments.

A registration of said amendments may be encrypted and added, in encrypted form, to the same file in which said amendments are put in. The locations and kind of the amendments within the marked filed thus can be found after decrypting the said added registration.

A registration of the properties of the cryptographic control algorithm used for making the amendments in said file, may be written into a separate control properties file. Said properties may be used during investigation of a (suspicious) file, for instance by marking the original (un-amended) source file under control of the algorithm as read-out from said control properties file and comparing the suspicious file with the re-marked source file.

In a file amended under control of said process, said amendments may - except be investigated- be rectified, moreover,by a party receiving such amended file, by means of said process. For that purpose, the receiving party will have to read, before rectifying the file, the properties of the control algorithm used for making those file amendments, from said control properties file. So, a replica of the process, constructed from the control properties file, may be used of investigating a (suspicious) marked file or for restoration of a marked file, resulting in a replica of the original source file. One additional note. Introduction of marking amendments inherently implies a degradation of the quality of the file: the more amendments, the less the quality. So, the present invention could be used as a part of a method for the distribution of files, for instance music files, which files are marked well under control of an cryptographic algorithm, which marks, besides, degrades the quality of such file. Recipients of such files may want to use (listen to) a non-degraded version of the file and are thus forced to request (buy) the properties (a cryptographic key) from said control properties file (managed by the file-owner).

Save music said file may comprise text, graphics, video or software.

### EXEMPLARY EMBODIMENTS

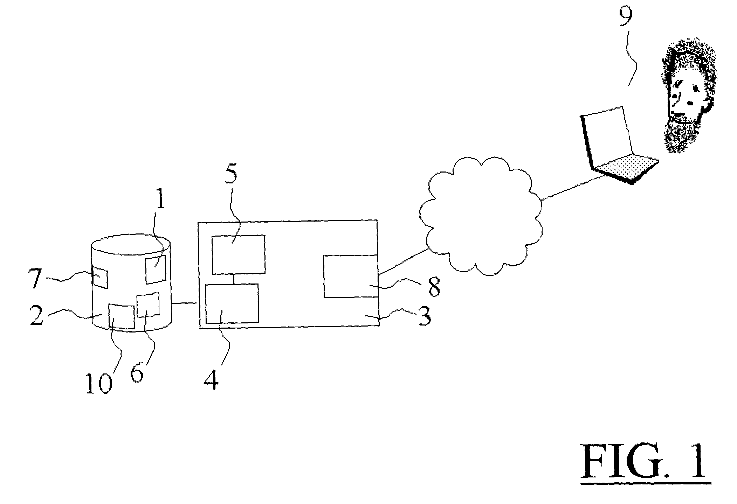

Figure 1 shows a system for marking a file 1, read out from a database 2, comprising a processor 3 fit for introducing controlled amendments in file 1. Processor 3 comprises means 4 for introducing (small) amendments in file 1, under control of a cryptographic control module 5 containing an activated cryptographic process, in processor 3.

Said amendments (modifications) may be small deletions. For instance the file is a telephone directory file, comprising a great number of records, each having a number of data fields. Under the control of the cryptographic modification algorithm, in several records the content of one or more fields are not-significantly amended. For instance in a couple of name-fields -which ones, is selected by the algorithm- the dot behind the first initial is deleted. In other fields the first capital may be replaced by a lower-case letter, etc. In this way minor, inconspicuous modifications are introduced, which afterwards can be used to prove the file's origin.

It is clear that it will be preferred to produce a listing of all those inconspicuous modifications. It may be preferred to enable the processor 3 -which after all introduces the modifications- also to produce such a listing of said amendments and to write said listing into a "amendments file" 6. As an alternative, the processor 3 could produce said listing, encrypt it and add it, in encrypted form, not to a separate file but to the modified file 1 itself.

It may be advantageous to register, for instance by said processor 3 too, the properties of the cryptographic control algorithm used for making the amendments in file 1, into a "control properties file" 7. Registering the properties of the cryptographic control algorithm used enables a further option of restoring an modified file 1, amended under control of the process, by a party receiving such amended file, using said process in reverse direction. To enable said restoration of the modified file 1, means are needed for reading out, by said receiving party, before rectifying said file amendments, the properties of the control algorithm used for making those file amendments, from said control properties file. As figure 1 shows, those means for reading out the algorithm properties may consist in a module 8 via which said receiving party, a user 9, can access said control properties file 7. Of course said module 8 preferably comprises means for control, verification and billing said access by users like user 9.

As a first example, the system of figure 1 could be used for controlled distribution of directory files like electronic telephone books etc. According to the method of the invention modified copies of an original file containing (directory) information records may be distributed to a series of recipients 9 in the following way. For each recipient the control module 5 of processor 3 selects a cryptographic process. For each recipient 9 an options list 10, comprising modifications that could be made to said information records, is generated and written into the database. For each recipient 9 the cryptographic process selected by module 5 is applied on said original file 1 so that information from each of said information records of said original file 1 is input to the selected cryptographic process. The selected cryptographic process may control per record
(a) whether or not a modification in said record will be made, or
(b) how the relevant record is to be modified.

Relevant modifications are selected from said options list 10.

As a second example, the system of figure 1 could be used for controlled distribution of music files like nowadays popular MP3 files. It could be imagined that a distributor of music, at the one side, wants to enable downloading files, for instance via the internet. At the other side, the distributor wants to be paid for at least the majority of the distributed music. According to the invention such file is marked by introducing controlled amendments in said file, under control of a cryptographic process loaded in module 5 of processor 3. Introduction said marking amendments inherently implies a degradation of the quality of the file: the more amendments, the less the quality. Files which thus are degraded by the modifications introduced by processor 3 may be distributed to users 9 free of charge. If, however, a user 9 -interested by the degraded file copy of a music piece- the user 9 can buy a high-quality version of the same copy by downloading -after having paid for it via module 8 (connected with billing means, not shown)- the encryption properties from the control properties file 7, which contains all needed parameters for setting an encryption program -which can be downloaded from the distributor's internet site- able to control the restoration of the freely downloaded, degraded file. After being restored, the file will have the same qualty as the original file. This way of distribution of files may offer a contribution to fair distribution of files like containing music, video etc. Within the domain of distribution of music files etc. the invention also offers the possibility to check the file's origin in an automated way. Present invention offers the opportunity to mark original (copyrighted) files in a smart way, viz. under control of a cryptographic marking mechanism. The markings are not removable without buying the removal parameters as explained in last paragraph. But also the detection of copyrighted files -marked according the invention- can be automated using the modification algorithm: a detection module can investigate, under control of the relevant algorithm and parameters, derived from the relevant control properties file 7, whether or not a files is copyrighted or is in the public domain.

## Claims

1. Method for marking files by introducing controlled amendments in such file, **CHARACTERIZED IN that** said amendments are introduced under control of a cryptographic process.

2. Method according to claim 1, **CHARACTERIZED IN that** said amendments comprise deletions of file parts, at one or more places controlled by said process.

3. Method according to claim 1, **CHARACTERIZED IN that** said amendments comprise replacements of file parts, at one or more places controlled by said process.

4. Method according to claim 1, **CHARACTERIZED IN that** said amendments comprise additions to said file, at one or more places controlled by said process.

5. Method according to claim 1, **CHARACTERIZED IN that** a registration of said amendments is written into a separate amendments file.

6. Method according to claim 1, **CHARACTERIZED IN that** a registration of said amendments is encrypted and added, in encrypted form, to said file.

7. Method according to claim 1, **CHARACTERIZED IN that** a registration of the properties of the cryptographic control algorithm used for making the amendments in said file, is written into a separate control properties file.

8. Method according to claim 1, **CHARACTERIZED IN that** in a file thus amended under control of said process, said amendments are rectified by a party receiving such amended file, by means of said process.

9. Method according to claim 7 and 8, **CHARACTERIZED IN that** said receiving party reads, before rectifying said file amendments, the properties of the control algorithm used for making those file amendments, from said control properties file.

10. Method according claim 1, **CHARACTERIZED IN that** said file to be amended is a text file.

11. Method according claim 1, **CHARACTERIZED IN that** said file to be amended is a graphics file.

12. Method according claim 1, **CHARACTERIZED IN that** said file to be amended is a video file.

13. Method according claim 1, **CHARACTERIZED IN that** said file to be amended is a software program file.

14. Method according to claim 1, said marked files being distributed to different recipients or recipient groups, **CHARACTERIZED BY** that for each recipient or recipient group a cryptographic process is selected which is employed for marking the relevant file to be distributed to said recipient or recipient group.

15. Method according to claim 14, said files each contain information records, **CHARACTERIZED BY** that said selected cryptographic process controls per record whether of not a modification to said record will be made and, if so, which modification is to be made in said record.

16. Method according to claim 14, **CHARACTERIZED BY** that the cryptographic process employs an options list (10) comprising optional file modifications which could be made in said file to be marked.

17. System for marking a file, comprising a processor for introducing controlled modifications in said file, **CHARACTERIZED IN that** said processor (3) comprises modification means (4,5) for introducing said modifications under control of a cryptographic process.

18. System according to claim 17, **CHARACTERIZED IN** means (3) for listing said amendments and writing said listing into a separate amendments file (6).

19. System according to claim 17, **CHARACTERIZED IN** means (3) for listing said amendments and for encrypting said listing and adding said listing, in encrypted form, to said amended file (1).

20. System according to claim 17, **CHARACTERIZED IN** means (3) for registering the properties of the cryptographic control algorithm used for making said file amendments, into a separate control properties file (7).

21. System according to claim 17, **CHARACTERIZED IN** means for restoring a file amended under control of said process, by a party (9) receiving such amended file, by means of said process.

22. System according to claim 20 and 21, **CHARACTERIZED IN** means (8) for reading out, by said receiving party, before rectifying said file (1) amendments, the properties of the control algorithm used for making those file amendments, from said control properties file (7).

23. System according to claim 17, comprising means (8) for said marked files to be distributed to different recipients (9) or recipient groups, **CHARACTERIZED BY** selection means (5) for selecting for each recipient or recipient group a cryptographic process for marking the relevant file to be distributed to said recipient or recipient group.

24. System according to claim 23, said files each containing information records. **CHARACTERIZED BY** that said selected cryptographic process controls per record whether of not a modification to said record will be made and, if so, which modification is to be made in said record.

25. Method according to claim 23, **CHARACTERIZED BY** an options list (10) to be read out by said modification means (4,5), comprising optional file modifications which could be made in said file to be marked.
